(19) Europäisches Patentamt
European Patent Office
Office européen des brevets

(11) Veröffentlichungsnummer : **0 056 980**
**B1**

(12) # EUROPÄISCHE PATENTSCHRIFT

(45) Veröffentlichungstag der Patentschrift : **25.07.84**

(51) Int. Cl.$^3$ : **C 04 B 21/08**, C 04 B 43/10, C 04 B 31/26

(21) Anmeldenummer : **82100382.9**

(22) Anmeldetag : **21.01.82**

(54) **Formkörper aus geblähten Mineralien.**

(30) Priorität : **27.01.81 DE 3102542**

(43) Veröffentlichungstag der Anmeldung : **04.08.82 Patentblatt 82/31**

(45) Bekanntmachung des Hinweises auf die Patenterteilung : **25.07.84 Patentblatt 84/30**

(84) Benannte Vertragsstaaten : **BE DE FR GB NL SE**

(56) Entgegenhaltungen :
**EP-A- 0 035 169**
**CH-A- 520 084**
**FR-A- 2 450 796**

(73) Patentinhaber : **HOECHST AKTIENGESELLSCHAFT**
**Postfach 80 03 20**
**D-6230 Frankfurt am Main 80 (DE)**

(72) Erfinder : **Eckardt, Peter, Dr.**
**Brandenburger Weg 14**
**D-6238 Hofheim am Taunus (DE)**
Erfinder : **Voetz, Franz Josef**
**Weilstrasse 26**
**D-6277 Camberg/Taunus (DE)**

**EP 0 056 980 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Der Einsatz loser Schüttungen aus geblähten Mineralien, wie Perlite und Vermiculit als Dämmaterial in Hohlkammerdecken und zweischaligen Mauerwerken ist seit Jahren geübte Praxis. Dabei stört allerdings die Staubentwicklung sowie die große Hydrophilie der Materialien. Nachteilig ist dabei außerdem, daß die gesamte Schüttung aus der Öffnung rieselt, wenn solche Decken oder Mauern geöffnet werden müssen. Um diesen Nachteil zu beheben, wurde versucht, geblähte Mineralien durch Bitumen, Melamin- oder Phenolformaldehydharze zu verfestigen. Diese Materialien sind jedoch entweder brennbar oder müssen in so hoher Konzentration eingesetzt werden, daß sie wirtschaftlich kaum vertretbar sind. Es ist auch bekannt, leichte geblähte Mineralien mit anorganischen Bindemitteln zu binden. Mit Zementen wie z. B. Portlandzement erhält man unter Zusatz von großen Mengen Wasser ein Perlitebeton der nach langer Trockenzeit Dichten zwischen 600 und 1 000 g/Liter aufweist.

Weiter lassen sich Perlite und Vermiculit mit Monoaluminiumphosphat binden, wie z. B. in der DE-OS 28 47 807 beschrieben. Auch hier müssen sehr große Mengen Wasser zugesetzt werden, um verarbeitbare Massen zu erhalten. Außerdem muß der Binder in Mengen zwischen 95 und 105 % der Trockenmasse zugemischt werden. Um den mechanischen Zusammenhalt zu verbessern, müssen Mineralfasern zugegeben werden.

Es wurde nun gefunden, daß man Formkörper aus geblähten Mineralien wie Perlite und Vermiculit mit verbesserter Festigkeit erhält, wenn man die geblähten Mineralien zuvor hydrophobiert und dann mit Aluminiumphosphat in Gegenwart eines Calciumaluminats verfestigt.

Gegenstand der Erfindung sind somit Formkörper aus geblähten Mineralien, die man herstellt, indem man das geblähte Mineral mit 0,3 bis 3,5 Gew.-% eines Hydrophobiermittels bestehend aus

a) einem Fettamin der Formel

$$R_1(OCH_2CH_2)_n-N\begin{matrix} \nearrow R_2 \\ \searrow R_3 \end{matrix}$$

wobei $R_1$ $C_8$-$C_{22}$, vorzugsweise $C_{14}$-$C_{22}$-Alkyl, $C_{14}$-$C_{22}$-Alkenyl oder $C_8$-$C_{22}$-Alkylphenyl, $R_2$ und $R_3$ Wasserstoff, $C_1$-$C_4$-Alkyl oder Alkenyl, Phenyl oder Benzyl und n eine Zahl von 0 bis 4 bedeutet, und

b) einer niedermolekularen Säure sowie gegebenenfalls

c) einer Fettsäure der Formel

$$R_5CO(OCH_2CH_2)_mOH$$

oder eines Fettalkohols der Formel

$$R_6(OCH_2CH_2)_mOH$$

wobei $R_5$ $C_8$-$C_{22}$, vorzugsweise $C_{14}$-$C_{22}$-Alkyl oder -Alkenyl, $R_6$ $C_9$-$C_{23}$, vorzugsweise $C_{15}$-$C_{23}$-Alkyl oder -Alkenyl und m eine Zahl von 0 bis 2 bedeutet, hydrophobiert, das so behandelte geblähte Mineral mit Calciumaluminat vermischt, und die Mischung mit Monoaluminiumphosphat in Form einer wäßrigen Lösung versetzt und anschließend unter Druck und Wärme verfestigt, wobei das Aluminiumphosphat in einer Menge von 2 bis 25 Gew.-%, berechnet als festes Aluminiumphosphat und bezogen auf die hydrophobierten geblähten Mineralien, zugegeben wird und der Anteil an Calciumaluminat 10 bis 50 Gew.-%, bezogen auf das Aluminiumphosphat in fester Form, beträgt.

Als Fettsäuren c) kommen vor allem die gesättigten und ungesättigten Fettsäuren sowie deren Mischungen in Frage, wie sie bei der Verseifung von natürlichen Fetten erhalten werden, wie beispielsweise Talgfettsäure, Cocosfettsäure, Stearinsäure, Ölsäure oder Palmitinsäure. Entsprechendes gilt für die Fettalkohole unter c) und die Fettamine a). Bei den niedermolekularen Säuren b) handelt es sich im wesentlichen um $C_1$-$C_4$-Carbonsäuren wie Ameisensäure oder Essigsäure, Dicarbonsäure wie Ameisensäure oder Essigsäure, Dicarbonsäuren wie Oxalsäure oder Malonsäure, Hydroxycarbonsäuren wie Milchsäure und einwertige anorganische Säuren wie Salzsäure oder Salpetersäure aber auch Amidosulfonsäure. Das molare Mischungsverhältnis der einzelnen Komponenten a), b) und c) kann in weiten Grenzen schwanken und beträgt von 10 : 1 : 1 über 1 : 1 : 10 bis zu 1 : 10 : 1. Eine ausreichende hydrophobierende Wirkung wird aber auch dann schon erreicht, wenn die Fettsäure bzw. Fettalkohol völlig fehlt. Das molare Mischungsverhältnis der Komponenten a) und b) reicht dann von 10 : 1 bis 1 : 10.

Diese Komponenten werden bei Temperaturen von ca. 30 bis 65 °C zusammen geschmolzen. Im allgemeinen gibt man noch Wasser und/oder niedere Alkohole hinzu, um gut zu handhabende Pasten oder Flüssigkeiten mit einem Feststoffgehalt von ca. 10 bis 40 Gew.-% zu erhalten. Für den Gebrauch werden diese konzentrierten Pasten oder Flüssigkeiten weiter mit Wasser oder Alkohol verdünnt auf einen Gehalt von ca. 2 bis 10, vorzugsweise 4 bis 7 Gew.-%. Mit diesen verdünnten Dispersionen werden dann die geblähten Mineralien behandelt, vorzugsweise durch Aufsprühen und anschließend getrocknet. Das Gewichtsverhältnis dieses Hydrophobiermittels bezogen auf das zu behandelnde geblähte Mineral beträgt 0,3 bis 3,5, vorzugsweise 0,3 bis 2 Gew.-%.

Das in dieser Weise hydrophobierte geblähte Mineral wird anschließend mit einem Calciumaluminat vermischt, mit einer wässrigen Lösung von primärem Aluminiumphosphat versetzt und dann in gewünschte Form gegeben, wo die Masse unter Einwirkung von Druck und Wärme verfestigt wird.

Als Calciumaluminate kommen Tonerdezement in Frage, die im allgemeinen aus 35-44 % CaO, 35-44 % $Al_2O_3$, 4-12 % $Fe_2O_3$ 0-10 % FeO und 3-11 % $SiO_2$ bestehen. Im wesentlichen bestehen solche Tonerdezemente aus Calciumaluminaten der Formeln $CaO \cdot Al_2O_3$, $CaO \cdot 2\ Al_2O_3$ oder $CaO \cdot 7\ Al_2O_3$.

Der Anteil an Calciumaluminat beträgt 10 bis 50, vorzugsweise 30 bis 40 Gew.-%, bezogen auf das Aluminiumphosphat in fester Form. Für eine ausreichende Verfestigung der Formkörper benötigt man 2 bis 25, vorzugsweise 5 bis 15 Gew.-% festes Aluminiumphosphat, bezogen auf die hydrophobierten geblähten Mineralien. Das Aluminiumphosphat wird als ca. 40-50 %ige wässrige Lösung eingesetzt und eventuell noch weiter mit Wasser verdünnt, zu der Mischung aus hydrophobierten geblähtem Mineral und Calciumaluminat gegeben und in einem Mischaggregat vermischt. Hierbei können noch weitere Füllstoffe wie z. B. Quarz, Aluminiumoxid, Schaumstoffe, Siliciumcarbid, Zinkoxid oder Mineralfasern sowie synthetische Fasern aus Polyester, Polyacrylnitril oder aromatischen Polyamiden eingearbeitet werden. Die Menge an Wasser wird im allgemeinen so bemessen, daß die gesamte Mischung gut feucht ist.

Nach einer Mischzeit von ca. 2 bis 10 Minuten wird die feuchte Mischung in die gewünschte Form gegeben und unter Druck verdichtet. Nach 5 bis 10 Minuten ist der Abbindevorgang bereits soweit fortgeschritten, daß der Formkörper entformt werden kann. Durch Erwärmung auf ca. 140 bis 250 °C erfolgt eine weitere Verfestigung.

## Beispiel 1

80 g Perlite mit einer Korngrößenverteilung unter 3 mm werden mit 1 Gew.-% eines Hydrophobiermittels der folgenden Zusammensetzung behandelt :

45 % Stearylamin, 2,5 % Ameisensäure, 2,5 % Stearinsäure,
20 % Isopropanol und 30 % Wasser.

Das so hydrophobierte Perlite wird mit 2,5 g Tonerdeschmelzzement folgender Zusammensetzung trocken vermischt :

37 % CaO, 40 % $Al_2O_3$, 15 % $Fe_2O_3$ und Rest $SiO_2$. Zu dieser Mischung gibt man 16 g 50 %ige Aluminiumphosphatlösung und weitere 35 ml Wasser, mischt die Masse 3 Minuten mit einem Flügelrührer durch und füllt die Masse in eine 10 × 10 cm Form. Man verdichtet den Formkörper unter einem Druck von 0,5 kp/cm$^2$, schalt nach 5 Minuten aus und trocknet und kondensiert den Formkörper bei 160 °C. Man erhält eine stabile Platte mit einer Dichte von 280 g/l, die eine hervorragende Kantenstabilität aufweist.

## Beispiel 2

80 g Vermiculit mit einer Korngrößenverteilung unter 3 mm werden mit 1,5 Gew.-% eines Hydrophobiermittels der folgenden Zusammensetzung behandelt.

29,9 % Stearylamin, 16,7 % Talgfettsäure, 3,4 % Essigsäure, 20 % Isopropanol und 30 % Wasser.

Das so hydrophobierte Vermiculit wird mit 3 g Tonerdeschmelzzement der in Beispiel 1 angegebenen Zusammensetzung trocken vermischt. Zu dieser Mischung gibt man 16 g 50 %iger Aluminiumphosphatlösung und 20 ml Wasser und behandelt die Masse wie in Beispiel 1 beschrieben. Man erhält eine stabile Platte mit einer Dichte von 360 g/l, die eine hervorragende Kantenstabilität aufweist.

## Vergleichsbeispiel 1

80 g nicht hydrophobiertes Perlite (Korngrößenverteilung unter 3 mm) werden ohne Zusatz von Tonerdeschmelzzement mit einer Mischung aus 16 g 50 %iger Aluminiumphosphatlösung und 90 ml Wasser gut vermischt. Die feuchte Masse wird in eine 10 × 10 cm Form gegeben und verdichtet. Bei Ausschalversuchen nach 5, 10 und 30 Minuten zerbrach der Probekörper, so daß er in der Form getrocknet und kondensiert werden mußte. Die Festigkeit ist ausreichend, die Oberfläche wenig abriebfest, die Kantenfestigkeit gering.

## Vergleichsbeispiel 2

80 g mit 1,0 % Hydrophobiermittel nach Beispiel 1 behandeltes Perlite (Korngrößenverteilung < 3 mm) werden ohne Zusatz von Tonerdeschmelzzement mit einer Mischung aus 16 g 50 %iger Aluminiumphosphatlösung und 35 ml Wasser, wie in Beispiel 1 angegeben, vermischt und weiterbehandelt. Wie im Vergleichsbeispiel 1 ließ sich der Probekörper nach 5, 10 und 30 Minuten nicht ausschalen ohne zu zerbrechen. Er wurde in der Form getrocknet und kondensiert. Die Festigkeit ist ausreichend, die Oberfläche wenig abriebfest, die Kantenfestigkeit gering.

Die erfindungsgemäß hergestellten Formkörper, wie z. B. Platten, können als wärmedämmende Decken und Wandplatten allein, oder in Verbindung mit unterschiedlichen Deckschichten, eingesetzt werden. Sie zeichnen sich aus durch eine sehr gute Grünfestigkeit und eine hohe Kantenstabilität. Vorteilhaft für den Gebrauch ist ein schichtweiser Aufbau der Platten, so können z. B. die äußeren Deckschichten aus feinkörnigem Material bestehen, während die innere Schicht aus grobkörnigem Material gebildet wird.

## Ansprüche

1. Formkörper aus geblähten Mineralien, dadurch gekennzeichnet, daß sie hergestellt werden, indem man das geblähte Mineral mit 0,3 bis 3,5 Gew.-% eines Hydrophobiermittels bestehend aus

a) einem Fettamin der Formel

$$R_1(OCH_2CH_2)_n{-}N\begin{matrix}\diagup R_2\\ \diagdown R_3\end{matrix}$$

wobei $R_1$ $C_8$-$C_{22}$, vorzugsweise $C_{14}$-$C_{22}$-Alkyl oder Alkenyl oder $C_8$-$C_{22}$-Alkylphenyl, $R_2$ und $R_3$ Wasserstoff, $C_1$-$C_4$-Alkyl oder Alkenyl, Phenyl oder Benzyl und n eine Zahl von 0 bis 4 bedeutet, und

b) einer nierdermolekularen Säure hydrophobiert, das so behandelte geblähte Mineral mit Calciumaluminat vermischt, und die Mischung mit Monoaluminiumphosphat in Form einer wäßrigen Lösung versetzt und anschließend unter Druck und Wärme verfestigt, wobei das Aluminiumphosphat in einer Menge von 2 bis 25 Gew.-%, berechnet als festes Aluminiumphosphat und bezogen auf die hydrophobierten geblähten Mineralien, zugegeben wird und der Anteil an Calciumaluminat 10 bis 50 Gew.-%, bezogen auf das Aluminiumphosphat in fester Form, beträgt.

2. Formkörper nach Anspruch 1, dadurch gekennzeichnet, daß sie hergestellt werden aus einem geblähten Mineral, das zusätzlich noch mit

c) einer Fettsäure der Formel

$$R_5CO(OCH_2CH_2)_mOH$$

oder eines Fettalkohols der Formel

$$R_6(OCH_2CH_2)_mOH$$

wobei $R_5$ $C_8$-$C_{22}$, vorzugsweise $C_{14}$-$C_{22}$-Alkyl oder -Alkenyl, $R_6$ $C_9$-$C_{23}$, vorzugsweise $C_{15}$-$C_{23}$-Alkyl oder -Alkenyl und m eine Zahl von 0 bis 2 bedeutet, hydrophobiert wurde.

## Claims

1. Shaped articles made from expanded minerals, which are characterized by that they are obtained by hydrophobizing the expanded minerals with 0.3 to 3.5 % by weight of a hydrophobizing agent consisting of

a) a fatty amine of the formula

$$R_1(OCH_2CH_2)_n{-}N\begin{matrix}\diagup R_2\\ \diagdown R_3\end{matrix}$$

in which $R_1$ is $C_8$-$C_{22}$-alkyl, preferably $C_{14}$-$C_{22}$-alkyl, $C_{14}$-$C_{22}$-alkenyl or $C_8$-$C_{22}$-alkylphenyl, $R_2$ and $R_3$ each are hydrogen, $C_1$-$C_4$-alkyl or $C_2$-$C_4$-alkenyl, phenyl or benzyl, and n is a number of from 0 to 4 ;

b) a low molecular weight acid, mixing the expanded minerals treated in this way with calcium aluminate, adding to the mixture monoaluminium phosphate in the form of an aqueous solution and subsequently consolidating it under the action of pressure and heat, the aluminum phosphate being added in an amount of 2 to 25 % by weight, calculated as solid aluminum phosphate and referred to the hydrophobized expanded minerals, and the amount of calcium aluminate being 10 to 50 % by weight, referred to the solid aluminum phosphate.

2. Shaped articles according to claim 1, which are characterized by that they are made from an expanded mineral which has additionally been hydrophobized by

c) a fatty acid of the formula

$$R_5CO(OCH_2CH_2)_mOH$$

or a fatty alcohol of the formula

$$R_6(OCH_2CH_2)_mOH$$

in which $R_5$ is $C_8$-$C_{22}$-alkyl, preferably $C_{14}$-$C_{22}$-alkyl or -alkenyl, $R_6$ is $C_9$-$C_{23}$-alkyl, preferably $C_{15}$-$C_{23}$-alkyl or -alkenyl, and m is a number of from 0 to 2.

## Revendications

1. Corps façonnés en minéraux expansés, caractérisés en ce qu'on les fabrique en hydrofugeant le minéral expansé avec 0,3 à 3,5 % en poids d'un hydrofuge constitué :

a) d'une amine grasse de formule

$$R_1(OCH_2CH_2)_n-N\begin{matrix}\diagup R_2\\ \diagdown R_3\end{matrix}$$

où $R_1$ est un radical alkyle ou alcényle en $C_8$-$C_{22}$, de préférence $C_{14}$-$C_{22}$, ou alkylphényle en $C_8$-$C_{22}$, $R_2$ et $R_3$ sont l'hydrogène, ou un radical alkyle ou alcényle en $C_1$-$C_4$, phényle ou benzyle, et n est un nombre compris entre 0 et 4, et

b) d'un acide à faible masse moléculaire ; en mélangeant le minéral expansé ainsi traité avec de l'aluminate de calcium et en additionnant le mélange de phosphate d'aluminium sous la forme d'une solution aqueuse et en le solidifiant ensuite sous l'effet de la chaleur et de la pression, le phosphate d'aluminium étant ajouté en une quantité de 2 à 25 % en poids, calculée en tant que phosphate d'aluminium solide et sur la base des minéraux expansés hydrofugés, le pourcentage d'aluminate de calcium étant de 10 à 50 % en poids sur la base du phosphate d'aluminium sous forme solide.

2. Corps façonnés selon la revendication 1, caractérisés en ce qu'ils sont préparés à partir d'un minéral expansé, lequel a été en outre hydrofugé avec

c) un acide gras de formule

$$R_5CO(OCH_2CH_2)_mOH$$

ou un alcool gras de formule

$$R_6(OCH_2CH_2)_mOH$$

où $R_5$ est un radical alkyle ou alcényle en $C_8$-$C_{22}$, de préférence $C_{14}$-$C_{22}$, $R_6$ est un radical alkyle ou alcényle en $C_9$-$C_{23}$, de préférence $C_{15}$-$C_{23}$, et m est un nombre compris entre 0 et 2.